# EUROPÄISCHE PATENTSCHRIFT

(11) **EP 0 358 887 B1**
(45) Veröffentlichungstag und Bekanntmachung des Hinweises auf die Patenterteilung: **06.09.1995**
(21) Anmeldenummer: 89113110.4
(22) Anmeldetag: 18.07.1989
(51) Int. Cl.: G05B 9/02

(54) **Messwertgeber-Fehlererkennungsschaltung**
Error detection circuit for a measuring device
Circuit de détection d'erreur dans un appareil de mesure

(30) Priorität: 14.09.1988 DE 3831193
(43) Veröffentlichungstag der Anmeldung: 21.03.1990
(73) Patentinhaber: WABCO GmbH, 30453 Hannover (DE)
(72) Erfinder: Gläbe, Klaus, D-3000 Hannover 1 (DE)
(74) Vertreter: Schrödter, Manfred, Dipl.-Ing.

(56) Entgegenhaltungen:
- WO-A-83/00124
- DE-A- 3 126 102
- DE-A- 3 234 637
- DE-A- 3 818 699
- GB-A- 2 127 507

## Beschreibung

Die Erfindung betrifft eine Meßwertgeber-Fehlererkennungsschaltung.

Eine derartige Meßwertgeber-Fehlererkennungsschaltung ist immer dann erforderlich, wenn Meßwertgeber in sicherheitsrelevanten Einrichtungen eingesetzt sind. Dies trifft insbesondere auch beim Einsatz von Meßwertgebern in blockiergeschützten Fahrzeugbremsanlagen zu. In solchen Bremsanlagen werden in der Regel induktive Meßwertgeber zur Erfassung der Radgeschwindigkeiten eingesetzt. Da solche Meßwertgeber hohen Schmutz- und Erschütterungsbelastungen ausgesetzt sind, unterliegen sie einer verhältnismäßig großen Störanfälligkeit. Eine Störung eines solchen Meßwertgebers muß unbedingt erkannt werden können, um eine fehlerhafte Regelung der blockiergeschützten Bremsanlage auszuschließen.

Aus der DE-OS 31 26 102 (WO-A- 83/00124) ist eine Fehlererkennungsschaltung für ein Antiblockierregelsystem bekannt. Diese Fehlererkennungsschaltung überprüft die Antiblockierregelschaltung während eines Fahrzeughalts. Hierzu schaltet eine Sicherheitsschaltung alle vorhandenen vier Radgeschwindigkeits-Meßwertgeber ab. Dann werden in jeweils einem Regelkanalpaar gleiche Prüfsignale eingespeist. Dabei durchlaufen die identischen Prüfsignale jeden der beiden Regelkreispaare. Die Fehlererkennungsschaltung vergleicht nun die ausgangsseitig in jedem Regelkreispaar entstehenden Signale miteinander. Dabei geht sie von der Voraussetzung aus, daß bei funktionsfähigen Regelkreisen die entstehenden Signale an den entsprechenden Stellen gleich sind. Sobald hingegen eine Nichtübereinstimmung dieser Signalfolgen feststellbar ist, wird ein Warn- oder Schaltsignal erzeugt. Eine Prüfung der Radgeschwindigkeits-Meßwertgeber selbst erfolgt nicht.

Aus der DE-OS 32 34 637 ist eine Fehlererkennungsschaltung für eine Bremsschlupfregelanlage vorbekannt, bei der im Radstillstand mittels eines astabilen Multivibrators auch die Meßwertgeber überwacht werden. Dabei entsteht bei angeschaltetem intaktem Meßwertgeber eine Eigenfrequenzschwingung niedriger Frequenz, die jedoch bei einem Fehler des Meßwertgebers durch Kurzschluß oder Unterbrechung aussetzt. Dadurch entsteht eine Abweichung in der Signalfolge von den anderen betriebsfähigen Meßwertgeberkreisen, die als Fehler erkannt wird. Die Schaltung ist relativ aufwendig aufgebaut.

Der Erfindung liegt die Aufgabe zugrunde, eine Fehlererkennungsschaltung der eingangs genannten Art derart zu verbessern, daß jeder Meßwertgeberkreis unabhängig von gleichartigen Schaltkreisen einzeln überwacht werden kann und dies unter einfachster Ausgestaltung.

Diese Aufgabe wird durch die in Patentanspruch 1 angegebene Erfindung gelöst. Weiterbildungen und vorteilhafte Ausführungsbeispiele der Erfindung sind in den Unteransprüchen angegeben.

Erforderlich ist lediglich, daß es sich um induktive oder kapazitive Meßwertgeber handelt, die mit einer Zeitdifferenzmeßeinrichtung verbindbar sind, da die Impedanz des Meßwertgebers für die Fehlererkennung ausgenutzt wird. Die Meßwertgeber-Fehlererkennungsschaltung erkennt sowohl Unterbrechungsfehler als auch sämtliche Kurzschlußfehler innerhalb des Meßwertgeberkreises.

Insbesondere ist auch die einfache Ausgestaltung der erfindungsgemäßen Meßwertgeber-Fehlererkennungsschaltung vorteilhaft. Da die Meßwertgeber in der Regel als Induktivität oder Kapazität ausgestaltet sind, bilden diese bereits einen Teil des erforderlichen Zeitglieds, das gegenüber einem anderen Meßwertgeberkreisabschnitt ohne den Meßwertgeberteil eine Laufzeitverzögerung der Prüfimpulse bewirkt. Es ist daher in der Regel lediglich eine Zeitmeßschaltung zusätzlich erforderlich, um die Meßwertgeber-Fehlererkennungsschaltung zu realisieren.

Die Erfindung wird anhand eines Ausführungsbeispiels, das in der Zeichnung dargestellt ist, näher erläutert.

Es zeigen:
- **Fig. 1**: ein Blockschaltbild einer erfindungsgemäßen Meßwertgeber-Fehlererkennungsschaltung mit der Zeitdifferenzmeßschaltung;
- **Fig. 2**: das Schaltbild aus Fig. 1 in detaillierter Ausbildung.

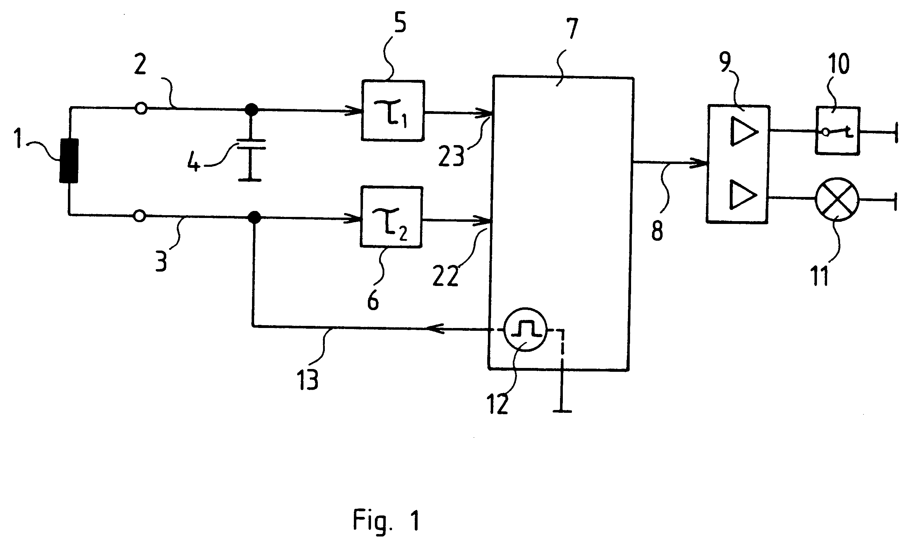

Fig 1 zeigt den schematischen Schaltungsaufbau der Fehlererkennungsschaltung mit einem induktiven Meßwertgeber, einem Prüfsignalgenerator, zusätzlichen Zeitgliedern und einer Zeitdifferenzmeßeinrichtung sowie einer Abschalt- und Anzeigeeinrichtung.

Der induktive Meßwertgeber ist als Induktivität (1) dargestellt. Dieser ist über eine erste Verbindungsleitung (2) mit einer Kapazität (4) verbunden. Dabei stellt der Meßwertgeber (1) in Verbindung mit der Kapazität (4) gleichzeitig ein Zeitglied dar. Der Meßwertgeber (1) ist über die erste Verbindungsleitung (2) auch mit einem ersten Zeitglied (5) mit der Verzögerungszeit T₁ verbunden. Das erste Zeitglied (5) ist ausgangsseitig mit dem Eingang einer Zeitdifferenzmeßeinrichtung (7) verbunden. Vom Ausgang der Zeitdifferenzmeßeinrichtung (7) ist eine Signalleitung (8) an eine Verstärkerschaltung (9) herangeführt, deren Ausgänge eine Abschalteinrichtung (10) und eine Signalisierungseinrichtung (11) ansteuern.

Der Meßwertgeber (1) ist außerdem noch an eine zweite Verbindungsleitung (3) angeschlossen, die den Meßwertgeber (1) über eine Leitung (13) mit einem Prüfgenerator (12) verbindet. Der Prüfgeneratoranschluß ist auch noch an ein zweites Zeitglied (6) mit der Verzögerungszeit T₂ herangeführt, das ausgangsseitig mit der Zeitdifferenzmeßeinrichtung (7) verbunden ist.

Der Prüfgenerator (12) ist als elektronische Schaltung ausgebildet, die in bestimmten zeitlichen Abständen Prüfsignale erzeugt. Diese Prüfsignale werden so gewählt, daß sie die Nutzimpulse, die der Meßwertgeber (1) erzeugt, nicht beeinflussen, weil die Fehlererkennungsschaltung auch während des Betriebes des Antiblockiersystems den Meßwertgeberkreis überwacht. Die Prüfimpulse werden in die zweite Verbindungsleitung (3) eingespeist und durchlaufen die Induktivität des Meßwertgebers (1) und der nachgeschalteten Kapazität (4). Dabei entstehen zeitversetzte Spannungsimpulse an der Kapazität (4). Diese Spannungsimpulse stehen nun gleichzeitig auch am ersten Zeitglied (5) an. Ein derartiges Zeitglied (5) dient zur Filterung der Sensor-Impulse und besteht seinerseits aus einem RC-Glied, das an seinem Ausgang nochmals eine Zeitversetzung des Spannungsimpulses bewirkt. Dieser Spannungsimpuls gelangt zum Eingang (23) der Zeitdifferenzmeßeinrichtung (7).

Die Meßimpulse, die in die zweite Verbindungsleitung (3) eingespeist werden, liegen gleichzeitig auch am zweiten Zeitglied (6) an. Da beide Zeitglieder (5, 6) gleich aufgebaut sind, ist die Zeitverzögerung am zweiten Zeitglied die gleiche wie beim ersten Zeitglied (5). Obwohl die Prüfimpulse durch das zweite Zeitglied (6) ebenfalls eine Zeitversetzung erfahren, gelangen sie bei intaktem Meßwertgeber (1) eher zur Zeitdifferenzmeßeinrichtung (7). Die Zeitdifferenzmeßeinrichtung vergleicht nun die beiden Empfangszeitpunkte miteinander und stellt deren Zeitabweichung fest. Dabei darf die Zeitabweichung einen bestimmten Wert nicht unterschreiten und einen anderen Wert aber auch nicht überschreiten. Erst wenn sich die Zeitabweichung in einem bestimmten zugelassenen Bereich befindet, wird der Meßwertgeberkreis als in Ordnung bewertet.

Sollten hingegen eine der Verbindungsleitungen unterbrochen sein, so würde die Zeitabweichung den zugelassenen Bereich überschreiten. In einem solchen Fall würde die Zeitdifferenzmeßeinrichtung (7) ein Fehlersignal erzeugen, das ausgangsseitig über die Verstärkerschaltung (9) eine Abschalteinrichtung (10) und eine Signalisierungseinrichtung (11) ansteuert. Durch die Abschalteinrichtung (10) kann der betroffene Kanal einer blockiergeschützten Bremsanlage abgeschaltet werden. Durch die Signalisierungseinrichtung (11) kann gleichzeitig dem Fahrer eines solchen Fahrzeugs der Defekt gemeldet werden.

Darüber hinaus wäre es auch möglich, daß im Meßwertgeber (1) oder in den Verbindungsleitungen (2, 3) ein Kurzschluß vorhanden ist. In einem solchen Fall würde das Prüfsignal nicht durch die Induktivität des Meßwertgebers (1) und die zugehörige Kapazität (4) beeinflußt, so daß die Prüfsignale nicht mit dem nötigen zeitlichen Abstand von der Zeitdifferenzmeßeinrichtung (7) erfaßt würden. Liegt aber nicht der erforderliche zeitliche Abstand zwischen den empfangenen Prüfsignalen vor, so bildet die Zeitdifferenzmeßeinrichtung (7) ebenfalls ein Fehlersignal aus, das wie oben beschrieben eine Abschaltung und eine Signalisierung bewirkt.

Mit der erfindungsgemäßen Überwachungsschaltung kann auf einfache Art und Weise während des Meßwertgeberbetriebs eine Überwachung durchgeführt werden. Hierzu sind im wesentlichen auch kaum zusätzliche Bauelemente notwendig. Die erforderliche Kapazität (4) ist meist als Filterkondensator vorhanden, der die Störimpulse der Meßwertgebersignale unterdrückt. Darüber hinaus ist in der Regel auch das Zeitglied (5) als Signalfilter vorhanden. Zur Realisierung dieser Fehlererkennungsschaltung ist deshalb lediglich eine Zeitdifferenzmeßschaltung und eine Prüfgeneratorschaltung erforderlich. Diese sind aber kostengünstig durch eine integrierte Schaltung realisierbar.

Betrachtet man die Regelschaltung einer blockiergeschützten Bremsanlage in Mikroprozessorausführung, so können diese Schaltungseinheiten bei einem vorhandenen Mikroprozessor auch softwaremäßig realisiert werden.

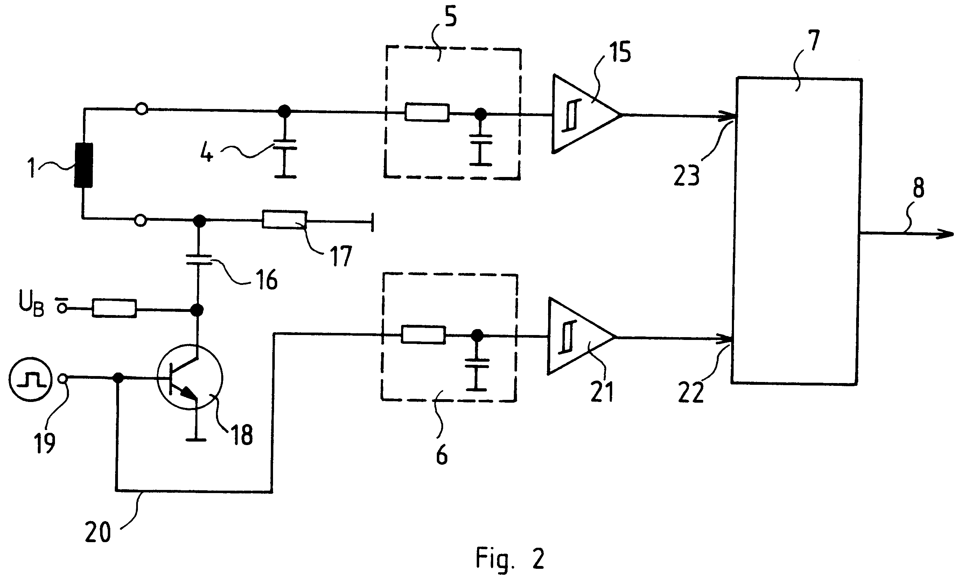

In Fig. 2 ist ein Schaltbild einer Fehlererkennungsschaltung dargestellt, das einen Prüfschaltkreis für einen induktiven Meßwertgeber in einer blockiergeschützten Bremsanlage zeigt. Der Prüfschaltkreis besteht im wesentlichen aus einem Meßwertgeberkreis und einem Einspeisekreis für das Prüfsignal.

Der Prüfkreis enthält den induktiven Meßwertgeber (1). Der Meßwertgeber (1) ist mit einem Kondensator (4) verbunden, der als Hochpaßfilter dient. Gleichzeitig ist ein RC-Glied (5) angeschlossen, das sowohl ein Signalfilter als auch ein Zeitglied darstellt. Das RC-Glied ist mit einem Schmitt-Trigger (15) verbunden, der ausgangsseitig die Zeitdifferenzmeßeinrichtung (7) ansteuert.

Der zweite Anschluß des Meßwertgebers (1) ist mit einem Koppelkondensator (16) und gleichzeitig mit einem Widerstand (17) verbunden. Über den Koppelkondensator (16) wird der Einspeisekreis mit dem Meßwertgeberkreis verbunden. Der Einspeisekreis besteht aus einem Transistorverstärker (18) in Emitterschaltung als Impulsgeber, der eingangsseitig mit einem Steuerimpulsanschluß (19) verbunden ist. Vom Steuerimpulsanschluß (19) zweigt über eine Leitung (20) der andere Zweig des Meßwertgeberkreises mit einem zweiten RC-Glied (6) als Zeitglied ab, das über einen Schmitt-Trigger (21) zur Zeitdifferenzmeßeinrichtung (7) führt.

Die beschriebene Fehlererkennungsschaltung nach Fig. 2 arbeitet im wesentlichen wie die nach dem Blockschaltbild aus Fig. 1 beschriebene Schaltung. Sie unterscheidet sich lediglich durch die Einfügung einer Signalverstärkung für die Prüfimpulse. Dabei wird die Signalverstärkungsschaltung über den Prüfsignalanschluß (19) angesteuert. Das verstärkte Prüfsignal wird über den Koppelkondensator (16) in den Meßwertgeberkreis eingespeist. Die an den RC-Gliedern (5, 6) anstehenden Prüfspannungsimpulse werden den beiden Schmitt-Triggern (15, 21) zugeleitet. Diese bilden aus den Spannungsspitzen verstärkte Rechteckimpulse, die eine digitale Auswertung in der Zeitdifferenzmeßschaltung (7) erlauben.

Derartige Fehlererkennungsschaltungen für Meßwertgeber sind nicht nur auf induktive Meßwertgeber beschränkt, sondern prinzipiell auch für kapazitive Meßwertgeber anwendbar. Hierfür ist es lediglich erforderlich, daß die Zeitglieder entsprechend ausgelegt sind. Im übrigen sind solche Fehlererkennungsschaltungen nicht nur auf den Einsatz in Bremsregelkreisen beschränkt, sondern in allen Meßwertgeberkreisen anwendbar, deren Meßwertgeber entweder aus induktiven oder kapazitiven Elementen bestehen. In solchen Meßwertgeberkreisen ist es auch nicht unbedingt erforderlich, daß zusätzliche Zeitglieder vorhanden sind. Ausreichend wäre in jedem Fall ein Zeitglied, das aus der Impedanz des Meßwertgebers und einem zusätzlichen kapazitiven oder induktiven Teil gebildet wird.

## Patentansprüche

1. Verfahren zur Meßwertgeber-Fehlererkennung für induktive oder kapazitive Meßwertgeber (1), wobei zur Prüfung ein Prüfsignal in den Meßwertgeberkreis (1, 2, 3, 5, 6) eingesteuert wird und wobei mittels einer Zeitmeßeinrichtung (7) die Laufzeit des Prüfsignals, das den Meßwertgeber (1) durchläuft, ausgewertet wird.

2. Meßwertgeber-Fehlererkennungsschaltung zur Anwendung des Verfahrens nach Anspruch 1, mit folgenden Merkmalen :
a) Es ist eine Zeitdifferenzmeßeinrichtung (7) vorgesehen, die so ausgebildet ist, daß durch sie die Laufzeitdifferenz eines von einem Prüfgenerator (12) gesendeten Prüfsignals erfaßt wird, das zwei verschiedene Prüfwege (3, 1, 2, 5), (6) durchläuft;
b) Der Prüfgenerator (12) ist über eine Leitung (13) an den Meßwertgeberkreis (1, 2, 3, 5, 6) angeschlossen, derart, daß das Prüfsignal einerseits über den Meßwertgeber (1) und andererseits direkt oder über ein Zeitglied (6) zur Zeitdifferenzmeßeinrichtung (7) gelangt;
c) die Zeitdifferenzmeßeinrichtung (7) ist zur Erzeugung eines Warn- und/oder Schaltsignals beim Überschreiten oder Unterschreiten einer bestimmten Laufzeitdifferenz an eine Signalisierungseinrichtung (11) und/oder eine Abschalteinrichtung (10) angeschlossen.

3. Meßwertgeber-Fehlererkennungsschaltung nach Anspruch 2, dadurch gekennzeichnet, daß der Meßwertgeber (1) einen induktiven Stabsensor zur Geschwindigkeitsfeststellung eines Fahrzeugrades darstellt, der mit einer Kapazität (4) verbunden ist und mit dieser ein Zeitglied bildet.

4. Meßwertgeber-Fehlererkennungsschaltung nach Anspruch 2 bis 3, dadurch gekennzeichnet, daß der Meßwertgeberkreis zusätzliche Zeitglieder (5, 6) enthält, wobei mindestens ein erstes Zeitglied (5) zwischen dem Meßwertgeber (1) und der Zeitdifferenzmeßeinrichtung (7) und mindestens ein zweites Zeitglied (6) zwischen dem Signaleinspeisepunkt und der Zeitdifferenzmeßeinrichtung (7) angeordnet ist.

5. Meßwertgeber-Fehlererkennungsschaltung nach mindestens einem der vorhergehenden Ansprüche 2 bis 4, dadurch gekennzeichnet, daß die Zeitdifferenzmeßeinrichtung (7) so ausgebildet ist, daß sie durch ein in einem ersten Prüfeingang (22) empfangenes Prüfsignal derart aktiviert wird, daß sie die zeitliche Differenz des in einem zweiten Prüfeingang (23) empfangenen Prüfsignals erfaßt und beim Über- oder Unterschreiten einer bestimmten Zeitdifferenz ein Ausgangssignal bildet, das zur Fehleranzeige und/oder zur Abschaltung des Meßwertgeberkreises dient.

6. Meßwertgeber-Fehlererkennungsschaltung nach mindestens einem der vorhergehenden Ansprüche 2 bis 5, dadurch gekennzeichnet, daß die Schaltung als integrierter Schaltkreis ausgebildet ist.

7. Meßwertgeber-Fehlererkennungsschaltung nach den Ansprüchen 2 bis 6, dadurch gekennzeichnet, daß die Funktion der Schaltung durch einen Mikroprozessor einer Regelschaltung einer antiblockiergeschützten Bremsanlage zusätzlich ausgeführt wird.

## Claims

1. Method for error detection in a measuring sensor for inductive or capacitive measuring sensors (1), a test signal being fed for the purposes of testing into the measuring sensor circuit (1, 2, 3, 5, 6) and the transit time of the test signal which passes through the measuring sensor (1) being evaluated by means of a time measuring device (7).

2. Error detection circuit for a measuring sensor for the application of the method according to claim 1, having the following characteristics :
a) there is provided a time differential measuring device (7) which is so formed that it detects the difference in transit time of a test signal which is transmitted from a test generator (12) and which passes through two different test paths (3, 1, 2, 5), (6);
b) the test generator (12) is connected via a line (13) to the measuring sensor circuit (1, 2, 3, 5, 6) in such a manner that the test signal reaches the time differential measuring device (7) on the one hand via the measuring sensor (1) and on the other hand either directly or via a timing element (6);
c) the time differential measuring device (7) is connected to a signalling device (11) and/or a switching-off device (10) so that if a specific transit time differential is exceeded or is not reached a warning signal and/or a switch signal is produced.

3. Error detection circuit for a measuring sensor according to claim 2, characterised in that the measuring sensor (1) constitutes an inductive rod sensor for determining the speed of a vehicle wheel, that sensor being connected to a capacitive element (4) and together with the capacitive element forming a timing element.

4. Error detection circuit for a measuring sensor according to claim 2 and 3, characterised in that the measuring sensor circuit contains additional timing elements (5, 6), at least a first timing element (5) being arranged between the measuring sensor (1) and the time differential measuring device (7) and at least a second timing element (6) being arranged between the signal input point and the time differential measuring device (7).

5. Error detection circuit for a measuring sensor according to at least one of the preceding claims 2 to 4, characterised in that the time differential measuring device (7) is so formed that it is so activated by a test signal received at a first test input (22) that it detects the time differential of the test signal received at a second test input (23) and if a specific time differential is exceeded or is not reached forms an output signal which serves to display the error and/or switch off the measuring sensor circuit.

6. Error detection circuit for a measuring sensor according to at least one of the preceding claims 2 to 5, characterised in that the circuit is formed as an integrated switching circuit.

7. Error detection circuit for a measuring sensor according to claims 2 to 6, characterised in that the circuit function is additionally effected by means of a microprocessor in a control circuit of an anti-lock braking system.

## Revendications

1. Procédé pour détecter des erreurs ou défauts de capteurs, applicable à des capteurs (1) inductifs ou capacitifs, selon lequel, à des fins de contrôle, on envoie un signal de contrôle dans le circuit de capteur (1, 2, 3, 5, 6) et selon lequel, au moyen d'un dispositif de mesure de temps (7), on exploite le temps de propagation du signal de contrôle traversant le capteur (1).

2. Circuit détecteur d'erreurs pour un capteur, servant à la mise en oeuvre du procédé selon la revendication 1, ayant les particularités suivantes:
a) il comprend un dispositif de mesure de différences temporelles (7) conçu de manière qu'il détermine la différence de temps de propagation d'un signal de contrôle envoyé par un générateur de contrôle (12) et parcourant deux trajets de contrôle différents (3, 1, 2, 5; 6);
b) le générateur de contrôle (12) est raccordé par une ligne (13) au circuit de capteur (1, 2, 3, 5, 6), de manière que le signal de contrôle parvienne au dispositif de mesure de différences temporelles (7) d'une part à travers le capteur (1) et d'autre part directement ou à travers un élément de retard (6);
c) en vue de la génération d'un signal d'avertissement et/ou de commutation en cas de dépassement ou de diminution au-dessous d'une différence de temps de propagation déterminée, le dispositif de mesure de différences temporelles (7) est raccordé à un dispositif de signalisation (11) et/ou un dispositif d'arrêt ou de déconnexion (10).

3. Circuit détecteur d'erreurs pour capteur selon la revendication 2, caractérisé en ce que le capteur (1) est un capteur inductif à tige pour déterminer la vitesse d'une roue de véhicule, qui est relié à une capacité (4) et forme avec celle-ci un élément de retard.

4. Circuit détecteur d'erreurs pour capteur selon la revendication 2 ou 3, caractérisé en ce que le circuit de capteur contient des éléments de retard supplémentaires (5, 6) dont au moins un premier élément de retard (5) est disposé entre le capteur (1) et le dispositif de mesure de différences temporelles (7) et au moins un second élément de retard (6) est disposé entre le point d'injection de signaux et le dispositif de mesure de différences temporelles (7).

5. Circuit détecteur d'erreurs pour capteur selon au moins une des revendications 2 à 4 précédentes, caractérisé en ce que le dispositif de mesure de différences temporelles (7) est réalisé pour être activé, au moyen d'un signal de contrôle reçu par une première entrée de contrôle (22), de manière qu'il détermine la différence temporelle d'un signal de contrôle reçu par une seconde entrée de contrôle (23) et que, en cas de dépassement ou de diminution au-dessous d'une différence temporelle déterminée, il forme un signal de sortie servant à l'indication d'une erreur et/ou à l'arrêt du circuit de capteur.

6. Circuit détecteur d'erreurs pour capteur selon au moins une des revendications 2 à 5 précédentes, caractérisé en ce qu'il est réalisé sous la forme d'un circuit intégré.

7. Circuit détecteur d'erreurs pour capteur selon les revendications 2 à 6, caractérisé en ce que la fonction du circuit est assurée en supplément par un microprocesseur d'un circuit de réglage faisant partie d'un système de freinage protégé contre le blocage des roues.
